# EUROPÄISCHE PATENTSCHRIFT

(11) **EP 3 022 116 B1**
(45) Veröffentlichungstag und Bekanntmachung des Hinweises auf die Patenterteilung: **06.02.2019**
(21) Anmeldenummer: 14795941.5
(22) Anmeldetag: 10.07.2014
(51) Int. Cl.: B64C 3/48

(54) **VERÄNDERBARES FLÜGELPROFIL**
MODIFIABLE WING PROFILE
PROFIL D'AILE VARIABLE

(30) Priorität: 17.07.2013 DE 102013011917
(43) Veröffentlichungstag der Anmeldung: 25.05.2016
(73) Patentinhaber: Airbus Defence and Space GmbH, 85521 Ottobrunn (DE)
(72) Erfinder: HASLACH, Horst, 82538 Geretsried (DE)
(74) Vertreter: LKGLOBAL Lorenz & Kopf PartG mbB Patentanwälte
(86) Internationale Anmeldenummer: PCT/DE2014/000348
(87) Internationale Veröffentlichungsnummer: WO 2015/007259

(56) Entgegenhaltungen:
- EP-A1- 1 128 072
- DE-A1- 10 325 950
- US-A- 1 341 758
- US-A1- 2010 224 734

## Beschreibung

Die vorliegende Erfindung betrifft Änderungen von Flügelprofilen, und betrifft insbesondere eine Aerodynamikstruktur für eine Flügel- oder Rudereinrichtung eines Luftfahrzeugs, ein Luftfahrzeug, ein Verfahren zur Anpassung einer äußeren Kontur einer Aerodynamikstruktur für eine Flügel- oder Rudereinrichtung, und eine Verwendung einer Aerodynamikstruktur in einem Luftfahrzeug.

Bei Flügel- und Steuerflächen werden beispielsweise Ruder, bzw. Rudersegmente zum Steuern vorgesehen. Außerdem kommen auch zusätzliche Klappen zur Anpassung des Profils an aerodynamische Gegebenheiten zur Anwendung, beispielsweise während der Startphase, während des Reiseflugs oder auch während der Landephase. Sowohl die Verwendung von Ruderelementen, als auch die Verwendung von zusätzlichen Klappen dient dazu, das aerodynamisch wirksame Profil zu verändern, d.h. die jeweiligen Flügel- und Steuerflächen an unterschiedliche Situationen anpassen zu können. DE 103 17 258 84 beschreibt z.B. einen Verstellmechanismus für einen formvariablen Flügel. EP 1 128 072 beschreibt einen fluidischen Stellantrieb für ebene Stellbewegungen. Dabei ist der Stellantrieb in einem Tragflügel eines Flugzeugs eingebaut, um dessen Sehnenform zu verändern bzw. einzustellen wie dies in den Figuren 9a, 9b gezeigt ist. Hierzu sind in der Länge unveränderliche Stützwände oder Stützstreben 51 innerhalb des Tragflügels 50 vorgesehen, die jeweils zwischen einer oberen Beplankung 53 und einer unteren Beplakung 55 angeordnet sind. Die obere Beplankung 51 und die untere Beplankung 55 sind von einer im wesentlichen nicht dehnbaren Beschaffenheit. Jedoch ist die unter Beplankung 55 mit Schlitzen 13 als Teil eines Stellantriebs 2 versehen.Die Schlitze 13 teilen die untere Beplankung 55 in Abschnitte 57, wobei die Schlitze 13 quer zur Richtung der mittels der Stellantriebs 2 bewirkten Verlängerung oder Verkürzung der unteren Beplankung 55 verlaufen, um bei gleichbleibender Fläche der oberen Beplankung 53 eine Verformung des Flügelprofils zu bewirken (Vergleich der Figuren 9a und 9b). Die Wände oder Stützen 51 bewirken eine im wesentlichen gleichbleibende Beabstandung der oberen Beplankung 53 von der unteren Beplankung 55. US 1 341 758 A1 beschreibt ein Flügelprofil mit veränderbaren Auswölbungen. US 2010/224734 A1 beschreibt ein Flügelprofil, dessen Form veränderbar ist. DE 103 25 950 A1 beschreibt einen Tragflügel eines Flugzeugs mit veränderbarem Profil. Es hat sich jedoch gezeigt, dass ein zusätzlicher Bedarf für weitere Konturänderungen des Flügelprofils besteht. Eine Aufgabe der vorliegenden Erfindung besteht daher darin, eine Aerodynamikstruktur zur Verfügung zu stellen, die sich hinsichtlich des Flügelprofils vielfältig anpassen und verändern lässt.

Diese Aufgabe wird durch eine Aerodynamikstruktur für eine Flügel- oder Rudereinrichtung eines Luftfahrzeugs, ein Luftfahrzeug, ein Verfahren zur Anpassung einer äußeren Kontur einer Aerodynamikstruktur für eine Flügel- oder Rudereinrichtung und eine Verwendung einer Aerodynamikstruktur in einem Luftfahrzeug nach einem der unabhängigen Ansprüche erreicht. Beispielhafte Ausführungsformen sind in den abhängigen Ansprüchen dargestellt.

Gemäß einem ersten Aspekt der Erfindung ist eine Aerodynamikstruktur für eine Flügel- oder Rudereinrichtung eines Luftfahrzeugs vorgesehen. Die Aerodynamikstruktur weist eine Tragstruktur und eine Außenhaut auf. Die Tragstruktur weist in Längsrichtung einen feststehenden Holm auf, der sich von einem Wurzelbereich zu einem äußeren Endbereich erstreckt. Die Tragstruktur weist in Querrichtung mehrere adaptive Fachwerksegmente auf, die jeweils aus einer Vielzahl von aneinandergereihten dreieckigen Fächern bestehen, welche von in der Länge feststehenden Lenkelementen und in der Länge einstellbaren Lenkelementen gebildet werden, Die Fachwerksegmente sind an den feststehenden Holm angeschlossen. Wenigstens ein Teil der dreieckigen Fächer weist mindestens auf einer Seite eines der einstellbaren Lenkelemente auf, so dass die Fachwerksegmente in ihrer Form einstellbar sind. Die Außenhaut ist an den Fachwerksegmenten gehalten. Durch Einstellen der Form der Fachwerke ist eine äußere Kontur der Aerodynamikstruktur wenigstens in Querrichtung veränderbar.

Das Vorsehen von den veränderbaren Fachwerksegmenten in Querrichtung bietet den Vorteil, dass vielfältige Konturänderungen möglich sind, da bereits die tragende Struktur, d.h. die Fachwerksegmente selbst in ihrer Kontur veränderbar sind. Der Flügel bzw. die Rudereinrichtung lässt sich somit sozusagen von innen heraus vielfältig an unterschiedliche Anforderungsprofile anpassen.

Aufgrund der Anpassbarkeit der äußeren Kontur lässt sich eine Reduzierung des aerodynamischen Widerstands beispielsweise bei Rudern oder auch bei Flügeln erzielen. Gleichzeitig kann die aerodynamische Leistung des Flügels oder des Ruders verbessert werden, beispielsweise weil Spalte, die bei zusätzlichen Klappen etc. zur Modifizierung der aerodynamisch wirksamen Kontur, aufgrund der Formänderung der tragenden Struktur nicht erforderlich sind. Zusätzlicher Vorteil der fehlenden Spalte ist eine Reduzierung des Lärms und eine Verringerung der elektromagnetischen Signatur (Radarsignatur) eines Luftfahrzeugs.

Die Begriffe "Querrichtung" und "Längsrichtung" beziehen sich auf eine quer zur Flugrichtung verlaufende Flügel- oder Rudereinrichtung. Die Längsrichtung eines in Befestigungsrichtung gesehen länglichen Flügels verläuft beispielsweise quer zur Flugrichtung. Die Querrichtung verläuft dann z.B. in Flugrichtung.

Bei schräg zur Flugrichtung angeordneten Flügel- oder Rudereinrichtungen verläuft die Querrichtung beispielsweise geneigt zur Längsachse des Flügels.

Bei einer an einem Ende an einer tragenden Struktur, z.B. einer Rumpfkonstruktion, befestigten Flügel- oder Rudereinrichtung kann die Längsrichtung auch als Befestigungsrichtung, Auskragrichtung oder Primärrichtung bezeichnet werden. Die Querrichtung verläuft dann quer zur Befestigungsrichtung und kann auch als Sekundärrichtung bezeichnet werden.

Im Falle eines Flügels ist der Wurzelbereich die Flügelwurzel und der äußere Endbereich ist das äußere Flügelende.

Die in der Länge feststehenden Lenkelemente werden auch als fixe Lenkelemente oder Stabelemente bezeichnet. Die feststehenden Lenkelemente sind z.B. beweglich gelagert, beispielsweise an Knotenpunkten, die als Gelenkpunkte ausgebildet sind.

Die in der Länge einstellbaren Lenkelemente werden auch als Stellantriebe, Stellelemente oder Aktuatoren bezeichnet.

Die Tragstruktur wird durch den Holm und die daran befestigten Fachwerksegmente gebildet. Die Tragstruktur bildet damit eine stabile Innenstruktur der Aerodynamikstruktur, beispielsweise eines Flügels oder eines Ruders.

Mit "Aerodynamikstruktur" wird der Bestandteil einer Flügel- oder Rudereinrichtung bezeichnet, der im Betrieb des Luftfahrzeugs die aerodynamische Wirkung hervorruft, z.B. bei einem Flügel einen Auftrieb (oder auch Abtrieb) erzeugt, oder bei einem Ruder ein Moment zum Herbeiführen einer Richtungsänderung des Luftfahrzeugs erzeugt. Die Aerodynamikstruktur kann auch als Flügel- oder Ruderstruktur bezeichnet werden. Der Begriff "Aerodynamikstruktur" wird im Zusammenhang der vorliegenden Erfindung verwendet, um die einer Flügel- und einer Rudereinrichtung gemeinsamen Bestandteile zu bezeichnen. Flügel- und Rudereinrichtungen weisen z.B. eine äußere, dem Luftstrom ausgesetzte Fläche auf, die auch als Außenhaut bezeichnet wird. Diese Fläche führt z.B. aufgrund ihrer Kontur bzw. ihrer Form und auch ihrer Anstellung, d.h. aufgrund ihres dem Luftstrom ausgesetzten Querschnitts, die gewünschte aerodynamische Wirkung herbei. Flügel- und Rudereinrichtungen weisen außerdem eine tragende Struktur auf, um die dem Luftstrom ausgesetzte Fläche zu halten und die erzeugten Kräfte in die Struktur des Luftfahrzeugs einzuleiten.

Bei dem Luftfahrzeug handelt es sich beispielsweise um ein Flugzeug; z.B. ist die Aerodynamikstruktur eine Tragfläche eines Tragwerks oder eine Leitfläche eines Leitwerks. Die "Tragfläche" wird auch als Flügeleinrichtung bezeichnet. In einem anderen Beispiel ist die Tragfläche ein (wesentlicher) Bestandteil der Flügeleinrichtung. Die "Leitfläche" wird auch als Rudereinrichtung bezeichnet. In einem anderen Beispiel ist die Leitfläche ein (wesentlicher) Bestandteil der Rudereinrichtung. Aufgrund der adaptiven Fachwerksegmente wird eine formvariable Aerodynamikstruktur zur Verfügung gestellt.

Gemäß einem Beispiel sind die Fachwerksegmente derart quer zur Längsrichtung des feststehenden Holms an diesen angeschlossen, dass dreieckige Fächer auf beiden Seiten des Holms vorgesehen sind.

Beispielsweise ist der Holm in einem Feld des Fachwerksegments integriert ausgebildet, so dass sich das Fachwerksegment zu beiden Seiten des Holms erstreckt, z.B. erstreckt sich das Fachwerksegment bei einem quer zur Flugrichtung ausgebildeten Flügel mit einem quer zur Flugrichtung verlaufenden Holm in Flugrichtung nach vorne und nach hinten.

Beispielsweise lässt sich das Flügelprofil über einen Großteil des Querschnitts durch die veränderbare Fachwerkstruktur anpassen.

Beispielsweise sind bei einem Flügel die Fachwerksegment in Längsrichtung des Flügels mindestens in einem mittleren Flügelbereich, also zwischen dem Wurzelbereich und der Flügelspitze angeordnet, so dass das Profil des Flügels mindestens in dem mittleren Bereich veränderbar ist. In einem Beispiel ist vorgesehen, dass ca. zwei Drittel der Flügellänge, oder Ruderstreckung als im Querschnitt anpassbare Struktur ausgebildet sind.

In einem weiteren Beispiel ist dies bei einer Rudereinrichtung vorgesehen.

In einem anderen Beispiel ist vorgesehen, dass das Fachwerksegment als zwei Subsegmente ausgebildet sind, und jeweils ein Subsegment auf der einen Seite des Holms angeschlossen ist und das andere Subsegment auf der anderen Seite des Holms.

Gemäß einem Beispiel bildet der Holm ein feststehendes Strukturelement eines Flügels oder einer Rudereinrichtung, und die sich daran anschließenden Fachwerksegmente ermöglichen die Anpassung der äußeren Kontur.

Die Fachwerksegmente sind beispielsweise in einem mittleren Bereich an den feststehenden Holm angeschlossen und werden durch den Holm in zwei Bereiche unterteilt, z.B. in einen vorderen und einen hinteren Bereich. Sowohl der vordere als auch der hintere Bereich sind einstellbar ausgebildet.

Gemäß einem Beispiel bildet der Holm einen Längsträger, an dem in Längsrichtung hintereinander mehrere Fachwerksegmente als Querspanten befestigt sind.

Die Querspanten sind beispielsweise quer zum Holm verlaufende Spanten.

Gemäß einem Beispiel sind mehrere Fachwerksegmente parallel zueinander angeordnet und verlaufen parallel zur Flugrichtung.

Gemäß einem Beispiel ist jeweils eine in Richtung des Fachwerksegments durchgehende Aneinanderreihung von feststehenden Lenkelementen vorgesehen.

Dadurch wird eine in Querrichtung des Flügels verlaufende Grundtragstruktur zur Einleitung der Kräfte in den feststehenden Holm zur Verfügung gestellt, die sich aufgrund der Ausbildung der dreieckigen Felder vielfältig verstellen lässt.

Gemäß einem Beispiel sind die einstellbaren Lenkelemente in den dreieckigen Fächern derart angeordnet, dass jedes dreieckige Fach auf der nach außen weisenden Seite ein einstellbares Lenkelement aufweist.

Dadurch wird ein über die gesamte Länge des Querschnitts einstellbares Profil ermöglicht.

Die Fachwerksegmente weisen z.B. an den beiden äußeren Längsseiten, d.h. an Ober- und Untergurt aneinandergereihte einstellbare Lenkelemente auf. Die Aneinanderreihung ist z.B. nur durch den Holm unterbrochen.

Gemäß einem Beispiel bildet die Aerodynamikstruktur an einer Längskante eine Vorderkante. Die Fachwerksegmente sind an ihrem der Vorderkante zugewandten Endbereich mit einem festen dreieckigen Fach ausgebildet. Dadurch wird im Bereich der Vorderkante eine zusätzliche Stabilität zur Verfügung gestellt. Die Vorderkante bildet beispielsweise einen im Betrieb der anströmenden Luft ausgesetzten Kantenbereich.

Gemäß einem Beispiel weist der feststehende Holm einen dreieckigen Querschnitt auf und hat drei Längskanten. Der dreieckige Querschnitt ist in die Fachwerksegmente integriert. Die Befestigung von feststehenden oder einstellbaren Lenkelementen ist an den drei Längskanten vorgesehen.

Dadurch wird zum einen eine ausreichende Tragfähigkeit in Längsrichtung gewährleistet, und zum anderen ist die Struktur der adaptiven Fachwerksegmente nur in einem Bereich eingeschränkt, wenn beispielsweise eine Seite des dreieckigen Holms nach oben oder unten weist, und somit innerhalb des Fachwerksegments ein Feld nicht einstellbar ist. Durch den dreieckigen Querschnitt lässt sich der Holm in die Struktur der Fachwerksegmente integrieren, so dass die Fachwerksegmente in diesem Bereich, d.h. im Bereich des Holms, durch den Holm selbst ersetzt werden. Dies bedeutet eine Materialeinsparung, was insbesondere hinsichtlich des Gewichts von Bedeutung ist.

Gemäß einem Beispiel ist die Außenhaut verformbar und wenigstens teilweise mit Haltepunkten über Halteelemente an den Fachwerksegmenten befestigt. Wenigstens ein Teil der Halteelemente ist als adaptive Halterungen ausgebildet, mit denen die Lage der Haltepunkte in Relation zu den Fachwerksegmenten veränderbar ist.

Die Halteelemente werden auch als sekundäre Lenkelemente bezeichnet, und die adaptiven Halterungen als sekundäre in der Länge einstellbare Lenkelemente. Die Lenkelemente der Fachwerksegmente können als primäre Lenkelemente, d.h. primäre in der Länge feststehende Lenkelemente und primäre in der Länge einstellbare Lenkelemente bezeichnet werden.

Beispielsweise ist die Außenhaut an der Vorderkante und den seitlichen Flächen mit Halteelementen an den Fachwerksegmenten befestigt. An der Hinterkante kann die Außenhaut direkt an den Endbereichen der Fachwerksegmente befestigt sein.

Die Haltepunkte sind beispielsweise als Sekundärtragwerk ausgebildet, z.B. als Trägerrost mit quer zu den Fachwerksegmenten verlaufenden Halteträgern. Die Fachwerksegmente bilden zusammen mit dem Holm das Primärtragwerk.

Mit adaptiven Halterungen wird eine zusätzliche Einstellbarkeit zur Verfügung gestellt, die insbesondere auch ein feineres Anpassen der äußeren Kontur ermöglichen.

Gemäß einem Beispiel sind die adaptiven Halterungen in der Länge einstellbare Halteglieder, mit denen der Abstand der Haltepunkte zu den Fachwerksegmenten anpassbar ist.

In einem anderen Beispiel sind die adaptiven Halterungen alternativ oder zusätzlich als Schwenkarme ausgebildet, die in ihrem Schwenkgrad in Relation zu den Fachwerksegmenten einstellbar sind.

Gemäß einem Beispiel ist die Außenhaut einteilig ausgebildet.

Durch eine durchgehende Ausbildung der äußeren Hülle wird die aerodynamische Leistungsfähigkeit der Aerodynamikstruktur verbessert. Durch die Vermeidung von insbesondere Spalten wird außerdem auch die Lärmerzeugung während des Flugbetriebs an den Flügeln reduziert.

Beispielsweise ist die Außenhaut quer zur Fläche flexibel. In einem anderen Beispiel ist die Außenhaut in Richtung der Fläche dehnbar ausgebildet; z.B. ist für die Außenhaut ein dehnbares Material bzw. ein dehnbarer Aufbau vorgesehen, beispielsweise mit elastischen Kunststoffen gefüllte Waben und Hybrid-Composite.

In einem Beispiel ist vorgesehen, dass die Profilveränderung so gesteuert wird, dass keine Längenänderung in der Fläche der Außenhaut auftritt. Für dieses Beispiel ist vorgesehen, dass die Außenhaut zwar in gewissem Rahmen biegeelastisch ist, jedoch nicht dehnbar sein muss.

Gemäß der Erfindung ist auch ein Luftfahrzeug vorgesehen, das eine Rumpfkonstruktion, ein Tragwerk mit wenigstens einer Tragfläche und ein Leitwerk mit wenigstens einer Leitfläche aufweist. Das Tragwerk und das Leitwerk sind an der Rumpfkonstruktion gehalten. Wenigstens eine Tragfläche und/oder eine Leitfläche ist mit einer Aerodynamikstruktur nach einem der vorhergehenden Beispiele ausgebildet.

Das Tragwerk umfasst beispielsweise einen oder mehrere Flügel. Das Leitwerk umfasst beispielsweise ein Höhenleitwerk, ein Seitenleitwerk und/oder ein Querruder.

Außerdem sind Kombinationen daraus vorgesehen, z.B. Tailerons, oder V-Leitwerke. Tailerons sind Höhenruder, die am Heck eines Flugzeugs vorgesehen sind, und bei denen durch eine unabhängige Ansteuerung der beiden Ruderhälften eigentliche Funktionen eines Querruders ergänzt oder sogar ganz ersetzt werden.

Gemäß der Erfindung ist auch ein Verfahren zur Anpassung einer äußeren Kontur einer Aerodynamikstruktur für eine Flügel- oder Rudereinrichtung vorgesehen, das die folgenden Schritte aufweist:
a) Bereitstellen einer Aerodynamikstruktur für eine Flügel- oder Rudereinrichtung eines Luftfahrzeugs. Die Aerodynamikstruktur weist eine Tragstruktur und eine Außenhaut auf. Die Tragstruktur weist in Längsrichtung einen feststehenden Holm auf, der sich von einem Wurzelbereich zu einem äußeren Endbereich erstreckt. Die Tragstruktur weist in Querrichtung mehrere adaptive Fachwerksegmente auf, die jeweils aus einer Vielzahl von aneinandergereihten dreieckigen Fächern bestehen, welche von in der Länge feststehenden Lenkelementen und in der Länge einstellbaren Lenkelementen gebildet werden. Die Fachwerksegmente sind an den feststehenden Holm angeschlossen. Die Außenhaut ist an den Fachwerksegmenten befestigt. Wenigstens ein Teil der dreieckigen Fächer weist mindestens auf einer Seite eines der einstellbaren Lenkelemente auf, so dass die Fachwerksegmente in ihrer Form einstellbar sind. Durch Einstellen der Form der Fachwerke ist die äußere Kontur der Aerodynamikstruktur wenigstens in Querrichtung veränderbar.
b) Einstellen der in der Länge einstellbaren Lenkelemente.
c) Verändern der äußeren Kontur der Aerodynamikstruktur wenigstens in Querrichtung.

Gemäß der Erfindung ist außerdem die Verwendung einer Aerodynamikstruktur nach einem der vorhergehenden Beispiele in einem Luftfahrzeug vorgesehen.

Gemäß einem Aspekt der Erfindung ist vorgesehen, dass eine Aerodynamikstruktur, wie beispielsweise ein Flügel, mit einer anpassbaren Tragstruktur ausgebildet ist. Die Anpassung der Tragstruktur erfolgt dadurch, dass in Querrichtung verlaufende Träger als Fachwerkstrukturen ausgebildet sind, bei denen die Felder dreieckig ausgebildet sind, so dass auf einer Seite der dreieckigen Felder ein Stellglied vorgesehen werden kann, um durch entsprechende Längenänderung des Stellglieds eine Verschiebung bzw. Formänderung der Fachwerkstruktur zu erzeugen. Da die Außenhaut an den Fachwerkstrukturen befestigt ist, erfolgt durch Veränderung der inneren tragenden Struktur auch eine Veränderung der äußeren Kontur. Zusätzlich kann die Aerodynamikstruktur durch Längenänderung der Stellglieder zwischen der Fachwerkstruktur und der Außenhaut verändert werden.

Es sei darauf hingewiesen, dass die Merkmale der Ausführungsbeispiele und Aspekte der Vorrichtungen auch für Ausführungsformen des Verfahrens sowie Verwendung der Vorrichtung gelten und umgekehrt. Außerdem können auch diejenigen Merkmale frei miteinander kombiniert werden, bei denen dies nicht explizit erwähnt ist, wobei sich synergetische Effekte ergeben können, die über die Addition der verschiedenen Merkmale hinaus gehen.

Nachfolgend wird anhand der beigefügten Zeichnungen näher auf Ausführungsbeispiele der Erfindung eingegangen. Es zeigen:
- **Fig. 1**: einen schematischen Querschnitt durch ein Beispiel einer Aerodynamikstruktur in einer ersten Profilkontur in Fig. 1A, in einer zweiten Profilkontur in FIG. 1B und in einer dritten Profilkontur in Fig. 1C;
- **Fig. 2**: eine Frontansicht eines Luftfahrzeugs; und
- **Fig. 3**: ein Beispiel eines Verfahrens zur Anpassung einer äußeren Kontur einer Aerodynamikstruktur

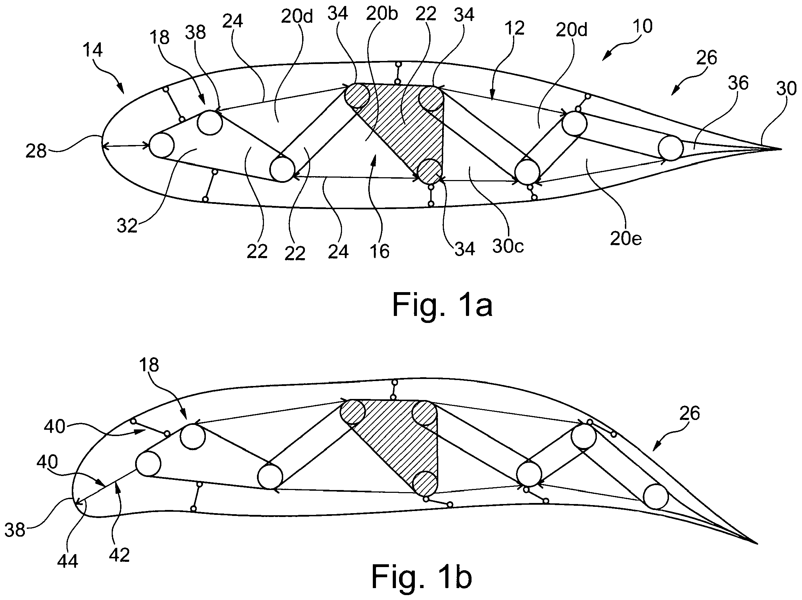

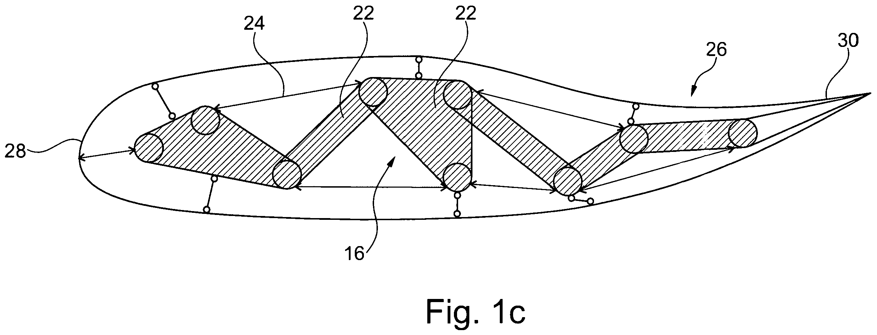

Fig. 1 zeigt eine Aerodynamikstruktur 10 für eine Flügel- oder Rudereinrichtung eines Luftfahrzeugs. Die Aerodynamikstruktur 10 weist eine Tragstruktur 12 und eine Außenhaut 14 auf. Die Aerodynamikstruktur 10 ist in einem Querschnitt der Flügel- oder Rudereinrichtung dargestellt. Die Längsachse der Aerodynamikstruktur verläuft senkrecht zur Blattebene. Die Tragstruktur 12 weist in Längsrichtung einen feststehenden Holm 16 auf, der sich von einem Wurzelbereich zu einem äußeren Endbereich erstreckt. Die Tragstruktur 12 weist in Querrichtung mehrere adaptive Fachwerksegmente 18 auf, die jeweils aus einer Vielzahl von aneinandergereihten dreieckigen Fächern 20 bestehen, welche von in der Länge feststehenden Lenkelementen 22 und in der Länge einstellbaren Lenkelementen 24 gebildet werden. Die Fachwerksegmente 18 sind an den feststehenden Holm 16 angeschlossen. Wenigstens ein Teil der dreieckigen Fächer 20 weist mindestens auf einer Seite eines der einstellbaren Lenkelemente 24 auf, so dass die Fachwerksegmente 18 in ihrer Form einstellbar sind. Die Außenhaut 14 ist an den Fachwerksegmenten 18 gehalten. Durch Einstellen der Form der Fachwerke ist eine äußere Kontur 26 der Aerodynamikstruktur 10 wenigstens in Querrichtung veränderbar.

Das Fachwerk ist in einem Beispiel mit scheibenartigen Fachwerksegmenten ausgebildet, die in Flugrichtung nebeneinander angeordnet sind. In einem anderen Beispiel sind die Fachwerksegmenten auch in der Längsrichtung des Flügels miteinander verbunden, z.B. auch über veränderbare Stellglieder.

In Fig. 1A ist beispielsweise die Aerodynamikstruktur mit einer vorderen Flügelkante 28 ausgebildet, sowie einer hinteren Flügelkante 30.

Das in Fig. 1A gezeigte Fachwerksegment 18 weist, ausgehend von der vorderen Flügelkante 28, ein erstes vorderes feststehendes dreieckiges Feld 32 auf, das jedoch in Fig. 1A als Option gezeigt ist. In einem anderen Beispiel ist diese dreieckige Feld 32 mit entsprechenden Fachwerkelementen bzw. Lenkelementen ausgebildet. Im Anschluss an das dreieckige Feld 32 erfolgt ein erstes dreieckiges Fach 20a, das auf zwei Seiten jeweils feststehende Lenkelemente 22 aufweist, und auf der nach oben zeigenden Seite ein in der Länge einstellbares Lenkelement 24. Anschließend ist ein zweites dreieckiges Fach 20b vorgesehen, das ebenfalls durch ein feststehendes Lenkelement 22 und, bezogen auf die Figur, auf der unteren Seite mit einem in der Länge einstellbaren Lenkelement 24 ausgebildet ist. Die dritte Seite wird durch den Holm 16 gebildet, der beispielsweise einen dreieckigen Querschnitt hat und drei Längskanten 34 aufweist. Der dreieckige Querschnitt des Holms ist in die Fachwerksegmente 18 integriert. Die Befestigung von feststehenden oder einstellbaren Lenkelementen 22, 24 ist an den drei Längskanten 34 vorgesehen.

Anschließend folgt ein drittes dreieckiges Fach 20c, gefolgt von einem vierten dreieckigen Fach 20d und einem fünften dreieckigen Fach 20e. Die Fächer sind jeweils durch eines der in der Länge einstellbaren Lenkelemente 24 nach oben bzw. unten abgeschlossen, und werden an den zwei anderen Rändern von den feststehenden Lenkelementen 22 gebildet, bzw. das dritte Fach 20c wird auf der einen Seite noch von dem dreieckigen Querschnitt des feststehenden Holms 16 gebildet.

Im hinteren Bereich des Flügels ist beispielsweise die Außenhaut 14 an das Ende des Fachwerksegments 18 über einen Anschluss 36 angeschlossen.

Wie mit Doppelpfeilsymbolen 38 angedeutet, sind die in der Länge einstellbaren Lenkelemente dazu vorgesehen, um den Abstand zwischen den beiden Anschlusspunkten verändern zu können.

In Fig. 1A ist an einem Beispiel als Option gezeigt, dass jeweils eine in Richtung des Fachwerksegments durchgehende Aneinanderreihung von feststehenden Lenkelementen vorgesehen ist. Die einstellbaren Lenkelemente 24 sind in den dreieckigen Fächern derart angeordnet, dass jedes dreieckige Fach auf der nach außen weisenden Seite ein einstellbares Lenkelement aufweist. Es sei darauf hingewiesen, dass diese durchgehende Aneinanderreihung von feststehenden Lenkelementen und die beschriebene Anordnung der einstellbaren Lenkelemente als Option gezeigt ist.

In einem anderen Beispiel ist vorgesehen, dass die einstellbaren Lenkelemente auch in den diagonal verlaufenden Strebenbereichen des Fachwerks vorgesehen sind.

In Fig. 1B ist dargestellt, wie mittels Anpassung der in der Länge einstellbaren Lenkelemente 24 eine andere Struktur bzw. Form der Fachwerksegmente 18 erreicht werden kann.

In Fig. 1A ist außerdem gezeigt, dass die Außenhaut gemäß einem Beispiel verformbar ist und wenigstens teilweise mit Haltepunkten 38 über Halteelemente 40 an den Fachwerksegmenten 18 befestigt ist. Wenigstens ein Teil der Halteelemente 40 ist als adaptive Halterungen 42 ausgebildet, was beispielsweise mit einer Pfeilspitze 44 angedeutet ist. Die adaptiven Halterungen sind vorgesehen, um die Lage der Halterungen in Relation zu den Fachwerksegmenten zu verändern. Dadurch lassen sich weitere Konturanpassungen vornehmen, wie die auch in Fig. 1B zu sehen ist.

Es sei jedoch darauf hingewiesen, dass das Vorsehen von adaptiven Halterungen 42 als Option in den Figuren 1A, 1B und 1C gezeigt ist.

Gemäß einem weiteren, nicht gezeigten Ausführungsbeispiel ist vorgesehen, dass die Halteelemente als starre Halterungen vorgesehen sind.

In Fig. 1C ist eine weitere Konturform der äußeren Kontur 26 dargestellt, die durch Anpassung der beschriebenen Stellglieder möglich ist.

Die adaptiven Halterungen 42 sind beispielsweise in der Länge einstellbare Halteglieder, mit denen der Abstand der Haltepunkte zu den Fachwerksegmenten anpassbar ist.

Die einstellbaren Lenkelemente 24 und die adaptiven Halterungen 42 sind z.B. als pneumatische oder hydraulische Stellglieder ausgebildet, oder als elektromechanische oder elektromagnetische Stellglieder.

In einem anderen Beispiel sind die adaptiven Halterungen 42 als Schwenkarme ausgebildet (nicht näher gezeigt), um weitere Anpassungen der Kontur vornehmen zu können.

Gemäß einem Beispiel ist vorgesehen, dass die Außenhaut einteilig ausgebildet ist, wie dies als Option in Fig. 1A bis 1C gezeigt ist.

Gemäß einem Beispiel, das in Fig. 1 als Option gezeigt ist, sind die Fachwerksegmente derart quer zur Längsrichtung des feststehenden Holms an diesen angeschlossen, dass dreieckige Fächer auf beiden Seiten des Holms vorgesehen sind. Beispielsweise ist der Holm in einem Feld des Fachwerksegments integriert ausgebildet, so dass sich das Fachwerksegment zu beiden Seiten des Holms erstreckt, z.B. erstreckt sich das Fachwerksegment bei einem quer zur Flugrichtung ausgebildeten Flügel mit einem quer zur Flugrichtung verlaufenden Holm in Flugrichtung nach vorne und nach hinten, erkennbar an der Flügelvorderkante und der hinteren Flügelkante.

Das Fachwerksegment kann auch als zwei Subsegmente ausgebildet sein, und jeweils ein Subsegment ist auf der einen Seite des Holms angeschlossen, und das andere Subsegment auf der anderen Seite des Holms.

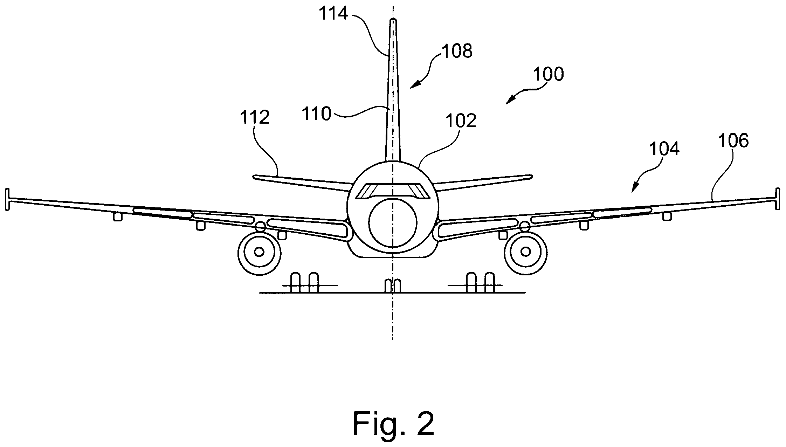

In Fig. 2 ist ein Luftfahrzeug 100 in einer Frontansicht gezeigt, das eine Rumpfkonstruktion 102 aufweist, sowie ein Tragwerk 104 mit wenigstens einer Tragfläche 106 und einem Leitwerk 108 mit wenigstens einer Leitfläche 110. Das Tragwerk 104 und das Leitwerk 108 sind an der Rumpfkonstruktion 102 gehalten. Wenigstens eine Tragfläche und/oder eine Leitfläche ist mit einer Aerodynamikstruktur 10 nach einem der vorhergehenden Beispiele ausgebildet.

Beispielsweise ist vorgesehen, dass die Tragfläche 106 ein Flügel ist, der mit einer Aerodynamikstruktur 10 nach einem der vorhergehenden Beispiele ausgebildet ist.

In einem weiteren Beispiel ist vorgesehen, dass beispielsweise ein Höhenleitwerk 112 mit einer Aerodynamikstruktur 10 nach einem der vorhergehenden Beispiele ausgebildet ist, oder ergänzend/alternativ ein Seitenleitwerk 114 mit der Aerodynamikstruktur 10 ausgebildet ist.

Bei dem in Fig. 2 gezeigten Luftfahrzeug 100 handelt es sich beispielsweise um ein Flugzeug. Neben der gezeigten Ausführungsvariante eines üblichen Verkehrsflugzeugs für den kommerziellen Luftfahrtbereich, beispielsweise für Passagiere oder Warentransport, ist außerdem ein Luftfahrzeug (nicht näher gezeigt) vorgesehen, das aus dem Bereich der Militärflugzeuge stammt. In einem anderen Beispiel ist vorgesehen, dass Transportflugzeuge oder Kampfflugzeuge mit der Aerodynamikstruktur 10 wenigstens in einem Teil der Flügel- oder Rudereinrichtungsbereich ausgebildet sind.

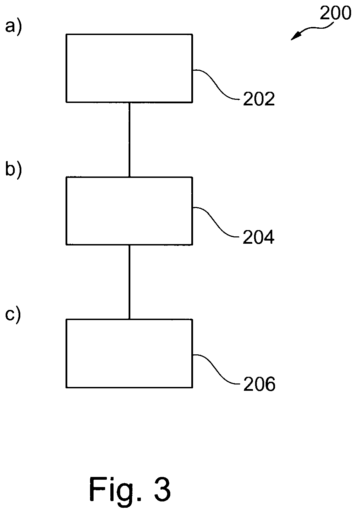

In Fig. 3 ist ein Verfahren 200 zur Anpassung einer äußeren Kontur einer Aerodynamikstruktur für eine Flügel- oder Rudereinrichtung gezeigt. Das Verfahren 200 umfasst die folgenden Schritte:
- In einem ersten Schritt 202 ist eine Bereitstellung einer Aerodynamikstruktur für eine Flügel- oder Rudereinrichtung eines Luftfahrzeugs vorgesehen. Die Aerodynamikstruktur weist eine Tragstruktur und eine Außenhaut auf, wobei die Tragstruktur in Längsrichtung einen feststehenden Holm aufweist, der sich von einem Wurzelbereich zu einem äußeren Endbereich erstreckt. Die Tragstruktur weist in Querrichtung mehrere adaptive Fachwerksegmente auf, die jeweils aus einer Vielzahl von aneinandergereihten dreieckigen Fächern bestehen, welche von in der Länge feststehenden Lenkelementen und in der Länge einstellbaren Lenkelementen gebildet werden. Die Fachwerksegmente sind an den feststehenden Holm angeschlossen, und die Außenhaut ist an den Fachwerksegmenten befestigt. Wenigstens ein Teil der dreieckigen Fächer weist mindestens auf einer Seite eines der einstellbaren Lenkelemente auf, so dass die Fachwerksegmente in ihrer Form einstellbar sind. Durch Einstellen der Form der Fachwerke ist die äußere Kontur der Aerodynamikstruktur wenigstens in Querrichtung veränderbar.
- In einem zweiten Schritt 204 ist ein Einstellen der in der Länge einstellbaren Lenkelemente vorgesehen.
- In einem dritten Schritte 206 erfolgt eine Veränderung der äußeren Kontur der Aerodynamikstruktur wenigstens in Querrichtung aufgrund der Einstellung der einstellbaren Lenkelemente.

Der erste Schritt 202 wird auch als Schritt a) bezeichnet, der zweite Schritt 204 als Schritt b), und der dritte Schritt 206 als Schritt c).

Die oberhalb beschriebenen Ausführungsbeispiele können in unterschiedlicher Art und Weise kombiniert werden. Insbesondere können auch Aspekte des Verfahrens für Ausführungsformen der Vorrichtungen sowie Verwendung der Vorrichtungen verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele und Aspekte beschrieben worden sind, auch in Kombination mit anderen Merkmalen oder Schritten anderer, oben beschriebener Ausführungsbeispiele und Aspekte verwendet werden können. Bezugszeichen in den Ansprüchen sind nicht als Einschränkung anzusehen.

## Patentansprüche

1. Eine Aerodynamikstruktur (10) für eine Flügel- oder Rudereinrichtung eines Luftfahrzeugs, aufweisend:
eine Tragstruktur (12); und
eine Außenhaut (14);
wobei die Tragstruktur in Längsrichtung einen feststehenden Holm (16) aufweist, der sich von einem Wurzelbereich zu einem äußeren Endbereich erstreckt;
wobei die Tragstruktur in Querrichtung mehrere adaptive Fachwerksegmente (18) aufweist, die jeweils aus einer Vielzahl von aneinandergereihten dreieckigen Fächern (20) bestehen, welche von fixen Stabelementen (22) und in der Länge einstellbaren Stellelementen (24) gebildet werden;
wobei die Fachwerksegmente an den feststehenden Holm angeschlossen sind;
wobei wenigstens ein Teil der dreieckigen Fächer mindestens auf einer Seite eines der einstellbaren Stellelemente aufweist, so dass die Fachwerksegmente in ihrer Form einstellbar sind;
wobei die Außenhaut an den Fachwerksegmenten gehalten befestigt ist; und
wobei durch Einstellen der Form der Fachwerke eine äußere Kontur (26) der Aerodynamikstruktur wenigstens in Querrichtung veränderbar ist.

2. Aerodynamikstruktur nach Anspruch 1, wobei die Fachwerksegmente derart quer zur Längsrichtung des feststehenden Holms an diesen anschließen, dass dreieckige Fächer auf beiden Seiten des Holms vorgesehen sind.

3. Aerodynamikstruktur nach Anspruch 1 oder 2, wobei jeweils eine in Richtung des Fachwerksegments durchgehende Aneinanderreihung von fixen Stabelementen vorgesehen ist.

4. Aerodynamikstruktur nach Anspruch 1, 2 oder 3, wobei die einstellbaren Stellelemente in den dreieckigen Fächern derart angeordnet sind, dass jedes dreieckige Fach auf der nach außen weisenden Seite ein einstellbares Stellelement aufweist.

5. Aerodynamikstruktur nach einem der vorhergehenden Ansprüche, wobei der Holm einen Längsträger bildet, an dem in Längsrichtung hintereinander mehrere Fachwerksegmente als Querspanten befestigt sind.

6. Aerodynamikstruktur nach einem der vorhergehenden Ansprüche, wobei mehrere Fachwerksegmente parallel zueinander angeordnet sind und parallel zur Flugrichtung verlaufen.

7. Aerodynamikstruktur nach einem der vorhergehenden Ansprüche, wobei die Aerodynamikstruktur an einer Längskante eine Vorderkante (28) bildet; und
wobei die Fachwerksegmente an ihrem der Vorderkante zugewandten Endbereich mit einem festen dreieckigen Fach (32) ausgebildet sind.

8. Aerodynamikstruktur nach einem der vorhergehenden Ansprüche, wobei der feststehende Holm einen dreieckigen Querschnitt hat und drei Längskanten (34) aufweist;
wobei der dreieckige Querschnitt des Holms in die Fachwerksegmente integriert ist; und
wobei die Befestigung von fixen Stabelementen oder einstellbaren Stellelementen an den drei Längskanten vorgesehen ist.

9. Aerodynamikstruktur nach einem der vorhergehenden Ansprüche, wobei die Außenhaut verformbar ist und wenigstens teilweise mit Haltepunkten (38) über Halteelemente (40) an den Fachwerksegmenten befestigt ist; und
wobei wenigstens ein Teil der Halteelemente als adaptive Halterungen (42) ausgebildet ist, mit denen die Lage der Haltepunkte in Relation zu den Fachwerksegmenten veränderbar ist.

10. Aerodynamikstruktur nach Anspruch 9, wobei die adaptiven Halterungen in der Länge einstellbare Halteglieder sind, mit denen der Abstand der Haltepunkte zu den Fachwerksegmenten anpassbar ist.

11. Aerodynamikstruktur nach einem der vorhergehenden Ansprüche, wobei die Außenhaut einteilig ist.

12. Luftfahrzeug (100), aufweisend:
eine Rumpfkonstruktion (102);
ein Tragwerk (104) mit wenigstens einer Tragfläche (106); und
ein Leitwerk (108) mit wenigstens einer Leitfläche (110);
wobei das Tragwerk und das Leitwerk an der Rumpfkonstruktion gehalten sind; und
wobei wenigstens eine Tragfläche und/oder eine Leitfläche mit einer Aerodynamikstruktur nach einem der vorhergehenden Ansprüche ausgebildet ist.

13. Verfahren (200) zur Anpassung einer äußeren Kontur eine Aerodynamikstruktur für eine Flügel- oder Rudereinrichtung, aufweisend die folgenden Schritte:
a) Bereitstellen (202) einer Aerodynamikstruktur für eine Flügel- oder Rudereinrichtung eines Luftfahrzeugs; und wobei die Aerodynamikstruktur eine Tragstruktur und eine Außenhaut aufweist; und wobei die Tragstruktur in Längsrichtung einen feststehenden Holm aufweist, der sich von einem Wurzelbereich zu einem äußeren Endbereich erstreckt; und wobei die Tragstruktur in Querrichtung mehrere adaptive Fachwerksegmente aufweist, die jeweils aus einer Vielzahl von aneinandergereihten dreieckigen Fächern bestehen, welche von fixen Stabelementen und in der Länge einstellbaren Stellelementen gebildet werden; und wobei die Fachwerksegmente an den feststehenden Holm angeschlossen sind, und die Außenhaut an den Fachwerksegmenten befestigt ist; und wobei wenigstens ein Teil der dreieckigen Fächer mindestens auf einer Seite eines der einstellbaren Stellelemente aufweist, so dass die Fachwerksegmente in ihrer Form einstellbar sind; und wobei durch Einstellen der Form der Fachwerke die äußere Kontur der Aerodynamikstruktur wenigstens in Querrichtung veränderbar ist;
b) Einstellen (204) der einstellbaren Stellelemente; und
c) Verändern (206) der äußeren Kontur der Aerodynamikstruktur wenigstens in Querrichtung.

14. Verwendung einer Aerodynamikstruktur nach einem der Ansprüche 1 bis 10 in einem Luftfahrzeug.

## Claims

1. Aerodynamic structure (10) for a wing or rudder device of an aircraft, having:
a load-bearing structure (12); and
an external skin (14);
the load-bearing structure having, in the longitudinal direction, an immobile spar (16) which extends from a root region to an outer end region;
the load-bearing structure having, in the transverse direction, a plurality of adaptive framework segments (18) which in each case consist of a multiplicity of triangular compartments (20) in a row which are formed by fixed rod elements (22) and adjustable-length actuating elements (24);
the framework segments being connected to the immobile spar;
at least part of the triangular compartments having one of the adjustable actuating elements at least on one side, with the result that the shape of the framework segments can be adjusted;
the external skin being fastened in a retained manner to the framework segments; and
an outer contour (26) of the aerodynamic structure being variable at least in the transverse direction by way of adjusting of the shape of the frameworks.

2. Aerodynamic structure according to Claim 1, the framework segments adjoining the immobile spar transversely with respect to the longitudinal direction of the latter in such a way that triangular compartments are provided on both sides of the spar.

3. Aerodynamic structure according to Claim 1 or 2, a juxtaposition of fixed rod elements which is continuous in the direction of the framework segment being provided in each case.

4. Aerodynamic structure according to Claim 1, 2 or 3, the adjustable actuating elements being arranged in the triangular compartments in such a way that each triangular compartment has an adjustable actuating element on the outwardly pointing side.

5. Aerodynamic structure according to one of the preceding claims, the spar forming a longitudinal carrier, to which a plurality of framework segments are fastened as transverse ribs behind one another in the longitudinal direction.

6. Aerodynamic structure according to one of the preceding claims, a plurality of framework segments being arranged parallel to one another and running parallel to the direction of flight.

7. Aerodynamic structure according to one of the preceding claims, the aerodynamic structure forming a front edge (28) on a longitudinal edge; and
the framework segments being configured with a fixed triangular compartment (32) on their end region which faces the front edge.

8. Aerodynamic structure according to one of the preceding claims, the immobile spar having a triangular cross section and having three longitudinal edges (34);
the triangular cross section of the spar being integrated into the framework segments; and
the fastening of fixed rod elements or adjustable actuating elements being provided on the three longitudinal edges.

9. Aerodynamic structure according to one of the preceding claims, the external skin being deformable and being fastened at least partially to the framework segments by way of retaining points (38) via retaining elements (40); and
at least part of the retaining elements being configured as adaptive holders (42), by way of which the position of the retaining points is variable in relation to the framework segments.

10. Aerodynamic structure according to Claim 9, the adaptive holders being length-adjustable retaining members, by way of which the spacing of the retaining points from the framework segments can be adapted.

11. Aerodynamic structure according to one of the preceding claims, the external skin being in one piece.

12. Aircraft (100), having:
a fuselage construction (102);
a wing assembly (104) with at least one wing surface (106); and
a tail unit (108) with at least one tail surface (110) ;
the wing assembly and the tail unit being held on the fuselage construction; and
at least one wing surface and/or one tail surface being configured with an aerodynamic structure according to one of the preceding claims.

13. Method (200) for adapting an outer contour of an aerodynamic structure for a wing or rudder device, having the following steps:
a) providing (202) of an aerodynamic structure for a wing or rudder device of an aircraft; the aerodynamic structure having a load-bearing structure and an external skin; and the load-bearing structure having, in the longitudinal direction, an immobile spar which extends from a root region to an outer end region, and the load-bearing structure having, in the transverse direction, a plurality of adaptive framework segments which consist in each case of a multiplicity of triangular compartments in a row which are formed by fixed rod elements and length-adjustable actuating elements; and the framework segments being connected to the immobile spar, and the external skin being fastened to the framework segments; and at least part of the triangular compartments having one of the adjustable actuating elements at least on one side, with the result that the shape of the framework segments can be adjusted; and the outer contour of the aerodynamic structure being variable at least in the transverse direction by way of adjusting of the shape of the frameworks;
b) adjusting (204) of the adjustable actuating elements; and
c) modifying (206) of the outer contour of the aerodynamic structure at least in the transverse direction.

14. Use of an aerodynamic structure according to one of Claims 1 to 10 in an aircraft.

## Revendications

1. Structure aérodynamique (10) pour une aile ou une gouverne d'un aéronef, présentant :
une structure porteuse (12) ; et
une peau extérieure (14) ;
la structure porteuse présentant dans la direction longitudinale un longeron fixe (16) qui s'étend depuis une région d'emplanture jusqu'à une région d'extrémité extérieure ;
la structure porteuse présentant dans la direction transversale plusieurs segments de charpente adaptatifs (18) qui se composent à chaque fois d'une pluralité de compartiments triangulaires (20) en rangée les uns à côté des autres, qui sont formés par des éléments de barres fixes (22) et des éléments de réglage (24) ajustables en longueur ;
les segments de charpente étant raccordés au longeron fixe ;
au moins une partie des compartiments triangulaires présentant, au moins d'un côté, l'un des éléments de réglage ajustables de sorte que la forme des segments de charpente puisse être ajustée ;
la peau extérieure étant fixée de manière fixée aux segments de charpente ; et
un contour extérieur (26) de la structure aérodynamique pouvant être modifié au moins dans la direction transversale par ajustement de la forme de la charpente.

2. Structure aérodynamique selon la revendication 1, dans laquelle les segments de charpente, transversalement à la direction longitudinale du longeron fixe, se raccordent à ce dernier de telle sorte que des compartiments triangulaires soient prévus des deux côtés du longeron.

3. Structure aérodynamique selon la revendication 1 ou 2, dans laquelle il est prévu à chaque fois un alignement en rangée d'éléments de barres fixes s'étendant dans la direction du segment de charpente.

4. Structure aérodynamique selon la revendication 1, 2 ou 3, dans laquelle les éléments de réglage ajustables sont disposés dans les compartiments triangulaires de telle sorte que chaque compartiment triangulaire présente un élément de réglage ajustable sur le côté tourné vers l'extérieur.

5. Structure aérodynamique selon l'une quelconque des revendications précédentes, dans laquelle le longeron forme un support longitudinal sur lequel sont fixés plusieurs segments de charpente les uns derrière les autres dans la direction longitudinale, en tant que membrures transversales.

6. Structure aérodynamique selon l'une quelconque des revendications précédentes, dans laquelle plusieurs segments de charpente sont disposés parallèlement les uns aux autres et s'étendent parallèlement à la direction de vol.

7. Structure aérodynamique selon l'une quelconque des revendications précédentes, dans laquelle la structure aérodynamique forme une arête avant (28) au niveau d'une arête longitudinale ; et
dans laquelle les segments de charpente sont réalisés au niveau de leur région d'extrémité tournée vers l'arête avant avec un compartiment triangulaire fixe (32).

8. Structure aérodynamique selon l'une quelconque des revendications précédentes, dans laquelle le longeron fixe a une section transversale triangulaire et présente trois arêtes longitudinales (34) ;
la section transversale triangulaire du longeron étant intégrée dans les segments de charpente ; et la fixation d'éléments de barres fixes ou d'éléments de réglage ajustables étant prévue au niveau des trois arêtes longitudinales.

9. Structure aérodynamique selon l'une quelconque des revendications précédentes, dans laquelle la peau extérieure est déformable et est fixée au moins en partie avec des points de fixation (38) par le biais d'éléments de fixation (40) au niveau des segments de charpente ; et
au moins une partie des éléments de fixation étant réalisée sous forme de fixations adaptatives (42) avec lesquelles la position des points de fixation par rapport aux segments de charpente peut être modifiée.

10. Structure aérodynamique selon la revendication 9, dans laquelle les fixations adaptatives sont des organes de fixation ajustables en longueur avec lesquels la distance des points de fixation par rapport aux segments de charpente peut être adaptée.

11. Structure aérodynamique selon l'une quelconque des revendications précédentes, dans laquelle la peau extérieure est d'une seule pièce.

12. Aéronef (100), présentant :
une construction de fuselage (102) ;
un châssis (104) avec au moins une surface portante (106) ; et
un empennage (108) avec au moins une surface de guidage (110) ;
le châssis et l'empennage étant fixés à la construction de fuselage ; et
au moins une surface portante et/ou une surface de guidage étant réalisées avec une structure aérodynamique selon l'une quelconque des revendications précédentes.

13. Procédé (200) pour l'adaptation à un contour extérieur d'une structure aérodynamique pour une aile ou une gouverne, présentant les étapes suivantes :
a) fourniture (202) d'une structure aérodynamique pour une aile ou une gouverne d'un aéronef ; et la structure aérodynamique présentant une structure porteuse et une peau extérieure ; et la structure porteuse présentant dans la direction longitudinale un longeron fixe qui s'étend depuis une région d'emplanture jusqu'à une région d'extrémité extérieure ; et la structure porteuse présentant dans la direction transversale plusieurs segments de charpente adaptatifs qui se composent à chaque fois d'une pluralité de compartiments triangulaires en rangée les uns à côté des autres, qui sont formés par des éléments de barres fixes et des éléments de réglage ajustables en longueur ; et les segments de charpente étant raccordés au longeron fixe, et la peau extérieure étant fixée aux segments de charpente ; et au moins une partie des compartiments triangulaires présentant, au moins d'un côté, l'un des éléments de réglage ajustables de telle sorte que la forme des segments de charpente puisse être ajustée ; et le contour extérieur de la structure aérodynamique pouvant être modifié au moins dans la direction transversale par ajustement de la forme de la charpente ;
b) ajustement (204) des éléments de réglage ajustables ; et
c) modification (206) du contour extérieur de la structure aérodynamique au moins dans la direction transversale.

14. Utilisation d'une structure aérodynamique selon l'une quelconque des revendications 1 à 10 dans un aéronef.
